# EUROPEAN PATENT SPECIFICATION

(11) **EP 0 503 123 B1**
(45) Date of publication and mention of the grant of the patent: **20.04.1994**
(21) Application number: 91103997.2
(22) Date of filing: 15.03.1991
(51) Int. Cl.: H02K 21/22

(54) **Stator for a brushless D.C. motor**
Stator für einen bürstenlosen Gleichstrommotor
Stator pour un moteur à courant continu sans balai

(43) Date of publication of application: 16.09.1992
(73) Proprietor: Horng, Alex, Kaohsiung (TW)
(72) Inventor: Horng, Alex, Kaohsiung (TW)
(74) Representative: LOUIS, PÖHLAU, LOHRENTZ & SEGETH

(56) References cited:
- EP-A- 0 223 678
- DE-U- 8 711 725
- US-A- 4 899 075
- US-A- 4 987 331

## Description

### BACKGROUND OF THE INVENTION

This invention relates to a brushless D.C. motor with a new improved stator. According to the former application case of the U.S. Patent No. 4,987,331, a brushless D.C. motor with an improved stator is constituted by a base made of plastics having sides, a coil winding around the base, two magnetic polar plates each forming a pair of magnetic poles fixed at both sides of the base, and a circuit board connected at one side of the base. The advantages of that invention are easy to manufacture, no environmental pollution caused by using varnish, low installation cost, and the low rate of defective products.

### SUMMARY OF THE INVENTION

The purpose of this invention is again to improve the stator so that the assembly work will be easier, and the thrust and repulsion of the motor will increase to start easily. This purpose is achieved with a stator of a brushless D.C. motor which is defined by the features indicated in claim 1.

### BRIEF DESCRIPTION OF THE DRAWINGS

This invention will now be described in detail with reference to the accompanying drawings wherein;
Figure 1 is a solid exploded perspective of the brushless D.C. motor in accordance with this invention;
Figure 2 is a bottom view of the stator base combined with magnetic polar plates;
Figure 3 is a cross-sectional view taken along line 3-3 of Figure 2;
Figure 4 is a side view of the stator base combined with magnetic polar plates and a circuit board;
Figure 5 is the first example of the stator base combined with upper and lower magnetic polar plates;
Figure 6 is the second example of the stator base combined with upper and lower magnetic polar plates; and
Figure 7 is a top view of the brushless D.C. motor in accordance with this invention.

### DETAILED DESCRIPTION OF THE INVENTION

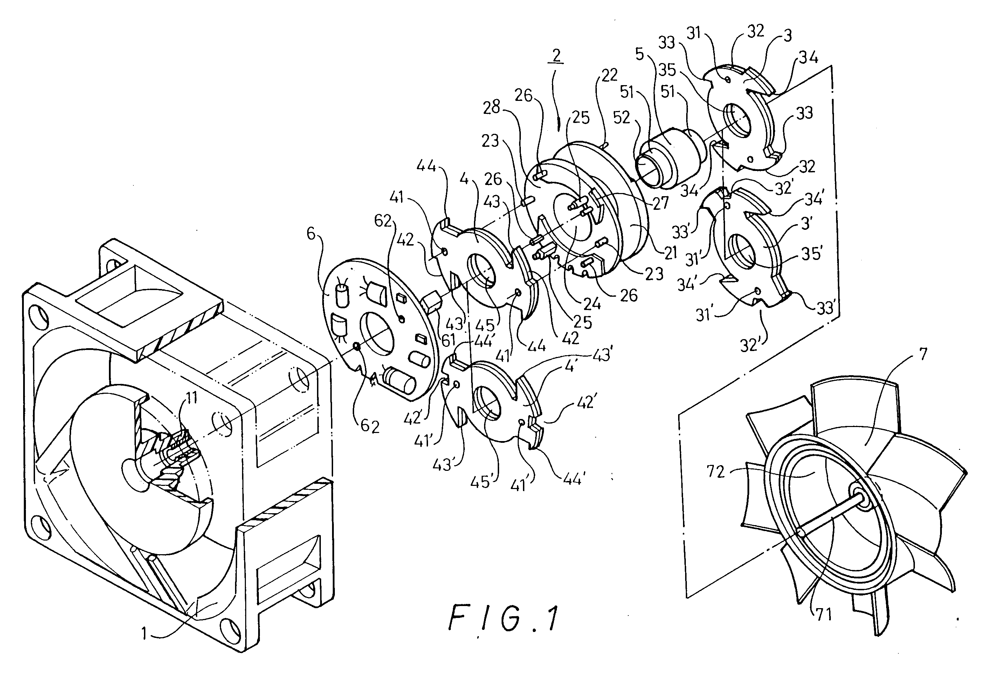

First, referring to Fig. 1, a brushless D.C. motor in accordance with this invention comprises a housing base 1 with a central shaft post 11. The outer perimeter of the central shaft post 11 is to provide the constituting elements of the stator to combine. The inner perimeter of the central shaft post 11 has a bearing, inside which the shaft 71 of rotor 7 is inserted and rotated.

The stator comprises a stator base 2, upper polar plate 3, lower polar plate 4, a metal cylinder 5, and a circuit board 6.

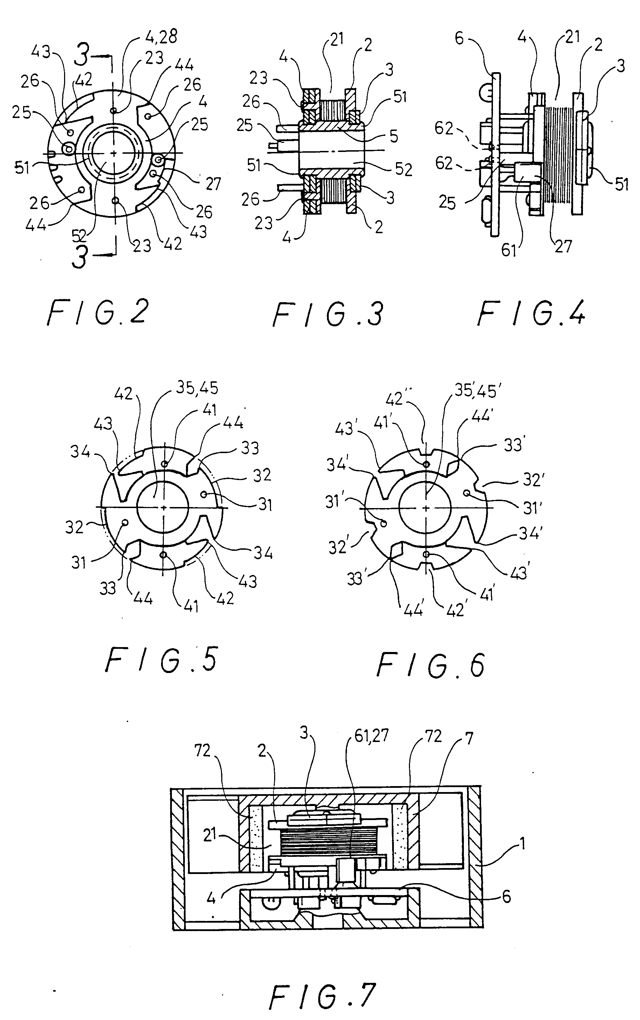

The stator base 2 is a winding wheel made of plastics with two side discs. The central perimeter 21 of the stator base 2 is wound by the coil. Two side discs have two sets of feet 22, 23 symmetrically protruding out, and notches 28 which have the same shape as upper and lower polar plates 3, 4. The notches 28 are engaged with polar plates 3, 4. The polar plates 3, 4 are firmly fixed with the stator base 2 by means of feet 22, 23 passing through the holes 31, 41 of the polar plates 3, 4. The central hole 24 located at the center of stator base 2 is provided with a metal cylinder 5 inserted therein. The stator base has feet 25 which engage the holes 62 of the circuit board 6, and other feet 26 which support the surface of the circuit board 6 to let them keep suitable spacing as shown in Fig. 4. The stator base 2 has a hole 27 to settle the IC 61 firmly.

The upper polar plate 3 and lower polar plate 4 engage the notches 28 of respective discs of stator base 2. In the holes 31, 41 of polar plates 3, 4 are inserted the feet 22, 23 of the stator base 2. In the holes 35, 45 of polar plates 3, 4 are inserted the thinner lips 51 of metal cylinder 5. The thinner lips 51 are expanded by punching method, as shown in Fig. 3, to fix polar plates 3, 4 and stator base 2 firmly.

Each polar plate consists of at least one plate. The recesses 32, 42 are at the respective pole of polar plates 3, 4. The air gap between the recesses 32, 42 and the permanent magnet 72 of rotor 7 is to increase the starting torque for rotor 7 starting easier by the different magnetic flux distribution at the magnetic poles. The rear part 33 of one polar plate 3 and the front part 44 of the other polar plate 4 are spaced in circumferential direction by a distance which is bigger than the distance by which the front part 34 of said one polar plate 3 is spaced in circumferential direction from the rear part 43 of said other polar plate 4 , as shown in Fig. 5, for better characteristics of magnetic induction. The polar plates can be designed as another form like upper polar plates 3' and lower polar plates 4' as shown in Figs. 1, 6. Each pole face of polar plates 3' and 4' has a respective recess 32' or 42' so that the different air gap between pole faces and the permanent magnet 72 of rotor 7 results in different reluctance. The rotor 7 will increase the starting torque for starting easily because of the non-uniform magnetic flux in the magnetic poles. The polar plates 3, 4 or the polar plates 3', 4' are bipolar.

The outer perimeter of the metal cylinder consists of one wider central part and two thinner lips 51. The central part of the metal cylinder is to combine with stator base 2. The two thinner lips 51 fix the polar plates 3, 4. By punching and expanding, two thinner lips 51 will combine polar plates 3, 4 with stator base 2 and metal cylinder 5. The inner perimeter 52 of the metal cylinder 5 is to provide the central shaft post 11 of housing base 1 to pass through.

Circuit board 6 will be fixed firmly by setting the feet 25 of stator base 2 in the holes 62. The electronic elements inside the circuit board 6 are used as driving circuit for starting the motor. The IC 61 of circuit board 6 is firmly fixed in the groove 27 of stator base 2.

The brushless D.C. motor in accordance with this invention is more compact than the former one. The assembly work will be easier and no varnish is used in manufacturing process to pollute the environment. Moreover, less electric leakage and better insulation effect in manufacturing will reduce the defect rate of products.

## Claims

1. A brushless D.C. motor, including a housing base (1), a stator (2, 3, 4, 5) having a circuit board (6), and a rotor (7) having a shaft (71),
said stator further comrising:
- a stator base (2) made of plastics and serving as a coil winding wheel having a center hole (24) and two side discs on which there are formed feet (22, 23) and notches (28);
- two polar plates (3, 4; 3', 4') having substantially the same shape as said notches (28) and having holes (31, 41; 31', 41') to engage with said feet (22, 23); and
- a metal cylinder (5) which is insertable in said center hole (24) of said stator base (2),
said stator being characterised in that
each of said two polar plates (3, 4; 3', 4') has two diametrically opposed recesses (32, 42; 32', 42') on its circumferential face to form gaps with determined widths between the permanent magnet of said rotor (7) and said circumferential face;
said housing base (1) comprises a central shaft post (11) on the outer peripheral surface of which the constituting elements of said stator are combined and on the inner peripheral surface of which a bearing is formed for rotatively accommodating said shaft (71) of said rotor (7);
said metal cylinder (5) has a wider central part and two thinner lips (51) on both of its ends and is able to accommodate said shaft post (11) of said housing base (1) by setting the inner perimeter of said metal cylinder (5) at the outer perimeter of said central shaft post (11); and
said polar plates (3, 4; 3', 4') are of the bipolar type and are fixed on said respective thinner lips (51) of said metal cylinder (5) in an angular position in which their polar axes are oriented to each other at an angle different from a right angle such that in an axial projective view the rear part (33; 33') of one polar plate (3; 3') and the front part (44; 44') of the other polar plate (4; 4') are spaced in circumferential direction by a distance which is bigger than the distance by which the front part (34; 34') of said one polar plate (3; 3') is spaced in circumferential direction from the rear part (43; 43') of said other polar plate (4; 4').

2. The brushless D.C. motor according to claim 1, wherein one side of said stator base (2) has a groove (27) to firmly fix an IC.

3. The brushless D.C. motor according to claim 1, wherein said wider central part of said metal cylinder (5) is combined with said stator base (2) and said two thinner lips (51) serve to fix said upper and lower polar plates (3, 4; 3', 4') by punching and expanding said thinner lips (51) so that said stator base (2) together with the other constituting elements (3, 4; 3', 4'; 6) are fixed on said shaft post (11) of said housing base (1).

## Patentansprüche

1. Ein bürstenloser Gleichstrommotor, der eine Gehäusebasis (1), einen Stator (2, 3, 4, 5) mit einer Leiterplatte (6) sowie einen Rotor (7) mit einer Welle (71) enthält,
wobei der Stator ferner umfaßt:
- eine Stator-Grundplatte (2), die aus Kunststoff hergestellt ist und als Spulenwicklungsrad dient, das eine mittige Bohrung (24) und zwei Seitenscheiben aufweist, an denen Positionierstifte (22, 23) und Aussparungen (28) ausgebildet sind;
- zwei Polplatten (3, 4; 3', 4'), die im wesentlichen dieselbe Form wie die Aussparungen (28) sowie Bohrungen (31, 41; 31', 41') aufweisen, die mit den Positionierstiften (22, 23) in Eingriff sind; und
- einen Metallzylinder (5), der in die mittige Bohrung (24) der Stator-Grundplatte (2) eingeschoben werden kann,
wobei der Stator dadurch gekennzeichnet ist, daß
jede der beiden Polplatten (3, 4; 3', 4') an ihrer Umfangsfläche zwei diametral entgegengesetzte Ausnehmungen (32, 42; 32', 42') aufweist, um zwischen dem Permanentmagneten des Rotors (7) und der Umfangsfläche Spalte mit bestimmten Weiten zu bilden;
die Gehäusebasis (1) ein mittiges Wellenträgerrohr (11) aufweist, an dessen äußerer Umfangsfläche die den Stator bildenden Elemente kombiniert sind und an dessen innerer Umfangsfläche ein Lager ausgebildet ist, um die Welle (71) des Rotors (7) drehbar aufzunehmen;
der Metallzylinder (5) einen dickeren mittigen Teil und an seinen beiden Enden zwei dünnere Lippen (51) besitzt und das Wellenträgerrohr (11) der Gehäusebasis (1) aufnehmen kann, indem die innere Umfangsfläche des Metallzylinders (5) an die äußere Umfangsfläche des mittigen Wellenträgerrohrs (11) angepaßt ist; und
die Polplatten (3, 4; 3', 4') vom bipolaren Typ sind und an den jeweiligen dünneren Lippen (51) des Metallzylinders (5) an einer Winkelposition angeordnet sind, in der ihre Polachsen in einem von einem rechten Winkel verschiedenen Winkel zueinander orientiert sind, so daß in einer Axialprojektion der hintere Teil (33; 33') einer Polplatte (3; 3') und der vordere Teil (44; 44') der anderen Polplatte (4; 4') in Umfangsrichtung um eine Strekke beabstandet sind, die größer als die Strecke ist, um die der vordere Teil (34; 34') der einen Polplatte (3; 3') in Umfangsrichtung vom hinteren Teil (43; 43') der anderen Polplatte (4; 4') beabstandet ist.

2. Der bürstenlose Gleichstrommotor gemäß Anspruch 1, bei dem eine Seite der Grundplatte (2) eine Nut (27) aufweist, um einen IC zu befestigen.

3. Der bürstenlose Gleichstrommotor gemäß Anspruch 1, bei dem der dickere mittige Teil des Metallzylinders (5) mit der Stator-Grundplatte (2) kombiniert ist und die beiden dünneren Lippen (51) dazu dienen, die oberen und die unteren Polplatten (3, 4; 3', 4') durch Stanzen und Auftreiben der dünneren Lippen (51) zu befestigen, so daß die Stator-Grundplatte (2) zusammen mit den anderen konstitutiven Elementen (3, 4; 3', 4'; 6) an dem Wellenträgerrohr (11) der Gehäusebasis (1) befestigt sind,

## Revendications

1. Moteur à courant continu sans collecteur, comprenant un carter (1), un stator (2, 3, 4, 5) doté d'un circuit imprimé (6) et un rotor (7) muni d'un arbre (71), ledit stator comprenant également:
- un support (2) en plastique et servant de roue pour enrouler un bobinage avec un trou central (24) et deux disques latéraux sur lesquels apparaissent des plots (22, 23) et des évidements (28);
- deux plaques polaires (3,4 ; 3', 4') sensiblement de même forme que lesdits évidements (28) et munies de trous (31, 41, 31', 41') s'engageant dans lesdits plots (22, 23); et
- un cylindre de métal (5) que l'on peut insérer dans ledit trou central (24) dudit support (2) du stator,
ledit stator étant caractérisé en ce que chacune des deux plaques polaires (3,4 ; 3', 4') comporte deux découpes opposées sur sa circonférence, formant des vides de largeur déterminée entre l'aimant permanent dudit rotor (7) et ladite circonférence ;
ledit carter (1) comprend un arbre central (11) sur la périphérie externe duquel les éléments constitutifs du stator sont placés, et dont la périphérie interne est munie d'un palier pour assurer la liaison rotative de l'arbre (71) et du rotor (7).
ledit cylindre (5) métallique comporte une partie centrale plus large et deux bords (51) plus fins sur ses deux extrémités et il peut contenir l'arbre (11) du carter (1) en ajustant sa périphérie intérieure sur la périphérie extérieure de l'arbre central (11); et
lesdites plaques polaires (3,4 ; 3', 4') sont bipolaires et fixées sur les bords fins (51) du cylindre de métal (5) selon une position angulaire dans laquelle leurs axes polaires sont orientés l'un vers l'autre d'un angle différent de l'angle droit, de telle sorte que, dans une vue en projection axiale, la partie arrière (33 ; 33') d'une plaque polaire (3 ; 3') et la partie avant (44 ; 44') de l'autre plaque polaire (4 ; 4') sont circonférentiellement espacées d'une distance qui est supérieure à celle qui sépare circonférentiellement la partie avant (34 ; 34') de la plaque (3 ; 3') à la partie arrière (43 ; 43') de l'autre plaque (4 ; 4').

2. Moteur à courant continu sans collecteur selon la revendication 1, caractérisé en ce qu'une face dudit support (2) du stator comporte une encoche (27) destinée à solidariser un circuit intégré.

3. Moteur à courant continu sans collecteur selon la revendication 1, caractérisé en ce que la partie centrale du cylindre de métal (5) se combine avec le support (2) du stator et les deux bords plus fins (51 ) servent à fixer lesdites plaques polaires (3,4 ; 3', 4') inférieure et supérieure par insertion à force qui provoque l'expansion desdits bords (51) de telle sorte que le support (2), ainsi que les autres éléments constitutifs (3,4 ; 3', 4'; 6) sont fixés sur ledit arbre (11) dudit carter (1).
